# EUROPÄISCHE PATENTSCHRIFT

(11) **EP 2 729 329 B1**
(45) Veröffentlichungstag und Bekanntmachung des Hinweises auf die Patenterteilung: **06.09.2017**
(21) Anmeldenummer: 12740919.1
(22) Anmeldetag: 09.07.2012
(51) Int. Cl.: B60R 21/203

(54) **FAHRZEUGLENKRAD MIT GASSACKMODUL**
VEHICLE STEERING WHEEL WITH AIR BAG MODULE
VOLANT DE DIRECTION DE VÉHICULE COMPORTANT UN MODULE DE COUSSIN GONFLABLE DE SÉCURITÉ

(30) Priorität: 07.07.2011 DE 102011078835
(43) Veröffentlichungstag der Anmeldung: 14.05.2014
(73) Patentinhaber: Takata AG, 63743 Aschaffenburg (DE)
(72) Erfinder: ZAHN, Matthias, 63811 Stockstadt (DE)
(74) Vertreter: Maikowski & Ninnemann Patentanwälte Partnerschaft mbB
(86) Internationale Anmeldenummer: PCT/EP2012/063388
(87) Internationale Veröffentlichungsnummer: WO 2013/004847

(56) Entgegenhaltungen:
- EP-A1- 0 414 245
- DE-A1- 4 431 718
- DE-U1- 8 619 591

## Beschreibung

Die Erfindung betrifft ein Fahrzeuglenkrad gemäß dem Oberbegriff des Anspruchs 1.

Es ist bekannt, in ein Fahrzeuglenkrad einen Gassack zu integrieren, der sich bei einem Aufprall des Fahrzeugs entfaltet und den Fahrer des Fahrzeugs hierdurch vor Verletzungen schützt. Zur Montage eines Gassacks in einem Fahrzeuglenkrad ist es üblich, ein Gassackmodul, das zusätzlich zu dem Gassack einen Gasgenerator und ein Gehäuse umfasst, in das Fahrzeuglenkrad einzusetzen. Ein solches Gassackmodul wird dabei mittig im Bereich der Lenkradnabe montiert. Da hierdurch die Zugänglichkeit der Lenkradbefestigung versperrt wird, ist es erforderlich, das Lenkrad an einer Lenkwelle des Fahrzeugs zu montieren, bevor das Gassackmodul montiert wird.

Aus den Druckschriften DE 44 15 765 A1 und DE 198 17 349 A1 ist es bekannt, einen Gassack unmittelbar in das Skelett eines Lenkrads zu integrieren. Auch bei diesen Lösungen verhält es sich so, dass der in das Fahrzeuglenkrad integrierte Gassack die Lenkradnabe abdeckt. Damit das Lenkrad nach Anordnung des Gassacks im Lenkrad mit der Lenkwelle verbunden werden kann, sind konstruktiv aufwendige Sonderlösungen erforderlich, die den Nabenanschluss ändern.

Die DE 86 19 591 U1 beschreibt ein gattungsgemäßes Fahrzeuglenkrad gemäß dem Oberbegriff des Anspruchs 1.

Weitere Fahrzeuglenkräder, bei denen ein Gassack außerhalb einer Lenkradnabe angeordnet ist, offenbaren die Druckschriften EP 0 414 245 A1 und DE 44 31 718 A1.

Der vorliegenden Erfindung liegt die Aufgabe zugrunde, ein weiteres Fahrzeuglenkrad bereitzustellen, das mit bereits montiertem Gassack in einfacher Weise mit der Lenkwelle eines Fahrzeugs verbindbar ist.

Diese Aufgabe wird erfindungsgemäß durch ein Fahrzeuglehkrad mit den merkmalen des Anspruchs 1 gelöst. Ausgestaltungen der Erfindung sind in den Unteransprüchen angegeben.

Danach ist vorgesehen, dass der Gassack in radialer Richtung außerhalb der Lenkradnabe und/oder exzentrisch zur Lenkradnabe im Fahrzeuglenkrad angeordnet ist. Dies führt dazu, dass der Lenkradbefestigungsbereich bei einer Befestigung des Fahrzeuglenkrads an einer Lenkwelle in axialer Richtung zugänglich ist und durch den montierten Gassack nicht abgedeckt wird. Dadurch wird es ermöglicht, das Lenkrad erst nach der Anordnung des Gassacks im Lenkrad mit der Lenkwelle zu befestigen.

Durch die exzentrische bzw. radial außen liegende Anordnung des Gassacks ist es möglich, auch nach dessen Montage von oben, d. h. in Richtung auf die Lenkwelle Zugang auf den Lenkradbefestigungsbereich zu haben und somit das Fahrzeuglenkrad ohne die Notwendigkeit einer konstruktiv aufwendigen Änderung des Nabenanschlusses an der Lenkwelle zu befestigen. Eine Befestigung des Fahrzeuglenkrads an der Lenkwelle kann vielmehr in der Weise erfolgen, dass die Lenkradnabe auf die Lenkwelle aufgeschoben wird und diese von oben in axialer Richtung zueinander fixiert werden.

Der Gassack ist vollständig und ausschließlich außerhalb der Lenkradnabe angeordnet, so dass keine einzige Lage des Gassacks die Lenkradnabe in axialer Richtung überdeckt.

Erfindungsgemäß bildet das Lenkradskelett einen Aufnahmebehälter für den Gassack aus, in dem der Gassack angeordnet ist. Somit bildet das Lenkrad selbst zusammen mit dem Gassack und einem ebenfalls im Lenkrad integrierten Gasgenerator ein Gassackmodul.

Gemäß einer Ausführungsvariante ist der Aufnahmebehälter exzentrisch zur Lenkradnabe ausgebildet. Dabei kann vorgesehen sein, dass der Aufnahmebehälter einstückig mit anderen Elementen des Lenkradskeletts ausgebildet ist. Der Gassack ist somit unmittelbar in das Lenkradskelett integriert. Beispielsweise weist das Lenkradskelett einen Speichenbereich auf und ist der Aufnahmebehälter im Speichenbereich, d.h. im Bereich mindestens einer Speiche ausgebildet.

Um eine exzentrische Anordnung des Gassacks im Lenkrad bzw. eine Anordnung radial außen bezogen auf die Lenkradnabe zu erreichen, wird bevorzugt ein Gassack geringer Packungsgröße eingesetzt. Eine geringe Packungsgröße des Gassacks kann grundsätzlich auf eine Vielzahl von Arten erreicht werden, beispielsweise durch Nutzen eines sehr dünnen Gewebes. Gemäß einer bevorzugten Ausgestaltung der Erfindung ist hierzu vorgesehen, dass der Gassack unter Vakuum verpackt wird, unter Verwendung einer Vakuumfaltungstechnologie. Durch Anlegen eines Vakuums an das Gassackinnere können beim Falten geringere Packungsgrößen erreicht werden.

Bei einer Integration des Gassacks direkt in das Fahrzeuglenkrad wird auch der Gasgenerator direkt am Fahrzeugskelett befestigt oder in dieses integriert. So wird der Gasgenerator beispielsweise unmittelbar an einer Speiche des Fahrzeuglenkrads befestigt. Auch kann vorgesehen sein, dass Hohlräume eines metallenen Lenkradskeletts einen Gasgenerator bilden, wozu beispielsweise ein im Lenkradkranz oder in einer Lenkradspeiche ausgebildeter Hohlraum mit einem Gas oder einem pyrotechnischen Treibsatz gefüllt ist.

In einer weiteren Ausgestaltung der Erfindung ist vorgesehen, dass das Lenkrad eine dem Fahrer zugewandte Abdeckkappe aufweist. Gassackabdeckungen in Form von Abdeckkappen werden an dem Lenkrad eines Fahrzeuges so montiert, dass ein im Lenkrad angeordneter Gassack zur Fahrzeuginnenraumseite hin abgedeckt ist. Damit sich der Gassack im Auslösefall in den Fahrzeuginnenraum hinein entfalten kann, weist die Gassackkappe einen Bereich auf, der sich durch den Druck des sich entfaltenden Gassack öffnet (beispielsweise aufreißt), so dass sich der aufgeblasene Gassack durch die Öffnung der Gassackkappe in den Fahrzeuginnenraum hinein erstrecken kann.

Gemäß einer Ausgestaltung der Erfindung ist vorgesehen, dass die Abdeckkappe zweiteilig ausgebildet ist. Ein erster Teil der Abdeckkappe deckt dabei den Gassack ab und schützt diesen. Ein zweiter Teil der Abdeckkappe, der erst nach Verbinden des Lenkrades mit einer Lenkwelle angebracht wird, deckt die Lenkradnabe ab. Dies ermöglicht es, Funktionen in die Abdeckkappe zu integrieren, nämlich in den zweiten Teil der Abdeckkappe, die über die Funktion eines optisch ansprechenden Abschlusses zum Fahrzeuginnenraum hin hinausgehen. Beispielsweise kann vorgesehen sein, dass der zweite Teil der Abdeckkappe Bedien- und/oder Displayelemente aufweist, die bei im Stand der Technik bekannten Fahrzeuglenkrädern am Lenkradkranz und/oder den Lenkradspeichen realisiert sind. In weiteren Ausführungsbeispielen ist vorgesehen, dass neben oder statt Bedien- und/oder Displayfunktionen Funktionen in den zweiten Teil der Abdeckkappe integriert sind, die sich bei bekannten Kraftfahrzeugen außerhalb des Lenkrads befinden. Hierzu gehören beispielsweise die Integration eines Ablegefachs und/oder eines Freisprechmikrofons und/oder eines Notizpads und dergleichen. Die Realisierung solcher Funktionen ist möglich, da der zweite Teil der Abdeckkappe bei Auslösen des Gassacks nicht geöffnet wird.

Des Weiteren kann vorgesehen sein, dass lediglich der zweite Teil der Abdeckkappe beweglich gelagert und mit Elementen, die eine Hupenfunktion realisieren, gekoppelt ist. Hierdurch kann von einer beweglichen Lagerung des Gassacks bzw. eines Gassackmoduls abgesehen werden, was zu einer vereinfachten Konstruktion führt. Alternativ kann jedoch ebenso vorgesehen sein, dass die Hupenfunktion durch den ersten Teil der Abdeckkappe oder sowohl durch den ersten Teil als auch durch den zweiten Teil der Abdeckkappe ausgelöst wird.

Gemäß einer Ausführungsvariante der Erfindung ist das Lenkrad in radialer Richtung ausschließlich außerhalb der Lenkradnabe und dabei derart exzentrisch zur Lenkradnabe angeordnet ist, dass der Gassack seitlich der Lenkradnabe in einem Raumbereich von maximal etwa 240° angeordnet ist. Dies bedeutet, dass der Gassack - in direkter Anordnung oder in Anordnung in einem Gassackmodul - sich seitlich angrenzend an die Lenkradnabe in einem Raumbereich bis zu 240° um die Lenkradnabe herum erstreckt. Der entsprechende Winkel kann auch kleiner sein und beispielsweise lediglich 120°, 90°; 60°, 45° oder 30° betragen. Damit liegt eine exzentrische Anordnung dahingehend vor, dass der Gassack sich nicht geschlossen um die Lenkradnabe herum erstreckt, sondern lediglich in einem bestimmten Raumbereich angeordnet ist. Insbesondere kann vorgesehen, dass der Gassack seitlich der Lenkradnabe im Bereich einer der Speichen angeordnet ist.

Die Erfindung wird nachfolgend unter Bezugnahme auf die Figuren der Zeichnung anhand mehrerer Ausführungsbeispiele näher erläutert. Es zeigen:
- Fig. 1: in perspektivischer Ansicht ein Ausführungsbeispiel eines Fahrzeuglenkrads, wobei das Fahrzeuglenkrad eine exzentrisch angeordnete Aufnahme für einen Gassäck ausbildet;
- Fig. 2: das Fahrzeuglenkrad der Figur 1 zusammen mit einem Gassack und einem Gasgenerator, die in bzw. an der Aufnahme des Fahrzeuglenkrades befestigt werden;
- Fig. 3: das Fahrzeuglenkrad der Figuren 1 und 2 unter zusätzlicher Darstellung einer zweiteiligen Abdeckkappe;
- Fig. 4A: eine Ausführungsvariante einer zweiteiligen Abdeckkappe;
- Fig. 4B: eine weitere Ausführungsvariante des einen Teils einer zweiteiligen Abdeckkappe;
- Fig. 5: ein erstes nicht zur Erfindung gehörendes Beispiel eines Fahrzeuglenkrads, wobei ein Gassack in einem vorgefertigten Gassackmodul angeordnet und das Gassackmodul unter Beibehaltung eines Zugangs zum Lenkradbefestigungsbereich am Lenkrad befestigt. wird; und
- Fig. 6: ein zweites nicht zur Erfindung gehörendes Beispiel eines Fahrzeuglenkrads, das bis auf den Umstand dem Beispiel der Figur 5 entspricht, dass das Gassackmodul eine zweiteilige Abdeckkappe aufweist.

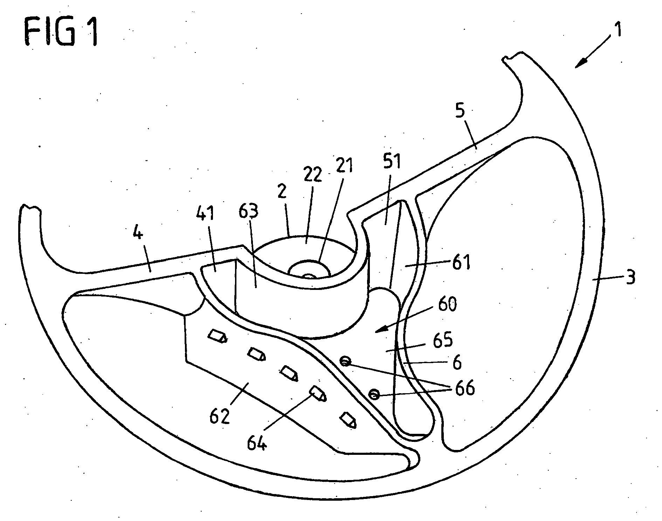

Die Figur 1 zeigt ein Fahrzeuglenkrad 1 mit einem Lenkradskelett, das eine Lenkradnabe 2, einen Lenkradkranz 3 und mehrere, im dargestellten Ausführungsbeispiel drei Lenkradspeichen 4, 5, 6 aufweist, die die Lenkradnabe 2 mit dem Lenkradkranz 3 verbinden.

Die Lenkradnabe 2 umfasst einen Lenkradbefestigungsbereich 21, der beispielsweise als mittige Öffnung in Form eines zylinderrohrförmigen Abschnitts ausgebildet ist und der der Aufnahme eines Lenkwellenstumpfes einer Lenkwelle (nicht dargestellt) dient. Die Lenkwelle wird auch als Lenkspindel bezeichnet und ist mit einem Lenkgetriebe gekoppelt. Zur axialen Fixierung der Lenkradnabe 2 und damit des Lenkrads 1 an einer solchen Lenkwelle ist beispielsweise eine Befestigungsschraube, eine Befestigungsmutter oder ein anderes Befestigungsmittel vorgesehen. Derartige Nabenbefestigungen sind dem Fachmann bekannt.

Es wird darauf hingewiesen, dass im Rahmen dieser Erfindung eine Befestigung des Lenkrads an der Lenkwelle eines Fahrzeugs betrachtet wird, bei der ein Zugang auf die Lenkradnabe 2 zur Realisierung einer solchen Befestigung von oben in Achsrichtung der Lenkwelle und vom Fahrzeuginnenraum auf diese zu erfolgt. Es ist nicht vorgesehen, dass die Befestigung des Lenkrads an der Lenkwelle durch seitlich eingedrehten Klemmelemente oder dergleichen erfolgt, wie sie aus der DE 44 15 765 A1 bekannt sind, da hierfür eine konstruktiv aufwendige und teure Änderung des Nabenanschlusses erforderlich wäre.

Die Lenkradnabe 2 weist des Weiteren einen tellerförmigen Abschnitt 21 auf, der sich an die mittige Öffnung 21 anschließt.

Das Lenkradskelett bildet im Bereich der mittleren Nabe 6 einen exzentrisch angeordneten Aufnahmebehälter 60 für einem Gassack auf, dessen Seitenwände sich teilweise in den Bereich der Lenkradspeichen 4 und 5 erstrecken. So umfasst der Aufnahmebehälter 60 zwei Seitenwände 61, 62, die näherungsweise zwei Schenkel eines Dreiecks bilden, die ausgehend von den Seitenwänden 4, 5 in Richtung des Lenkradkranzes 3 zusammenlaufen. Die Basis dieses näherungsweise dreieckförmigen Aufnahmebehälters 60 wird durch Seitenwände 41, 51 der Lenkradspeichen 4, 5 sowie eine diese Seitenwände 41, 51 verbindende, kreisförmig gebogene Seitenwand 63 gebildet. Die Seitenwand 63 ist dabei in Richtung des Aufnahmebehälters 60 gewölbt, so dass der Nabenbereich 2 in keiner Weise von dem Aufnahmebehälter 60 überdeckt und vielmehr frei zugänglich ist.

Der Boden des Aufnahmebehälters 60 wird durch eine Bodenplatte 65 gebildet. In dieser sind zwei Öffnungen 66 ausgebildet, die der Befestigung eines Gasgenerators in dem Aufnahmebehälter 60 dienen, wie noch ausgeführt werden wird. Des Weiteren sind an der Außenseite der Seitenwände 61, 62 jeweils eine Mehrzahl Befestigungsmittel 64 zur Befestigung einer Abdeckkappe ausgebildet, wie ebenfalls noch erläutert werden wird.

Im Ausführungsbeispiel der Figur 1 ist der Aufnahmebehälter 60 einstückig mit den anderen Elementen des Lenkradskeletts ausgebildet. Lenkradskelett und Aufnahmebehälter bestehen beispielsweise aus einer Magnesium-Aluminiumlegierung und sind als Gußteil ausgebildet. Durch die Verwendung von Aluminium oder einer Aluminiumlegierung zur Realisierung des Lenkradskelettes können dünnwandige Wände bereitgestellt werden, was die Bereitstellung des Aufnahmebehälters 60 im Speichenbereich erleichtert.

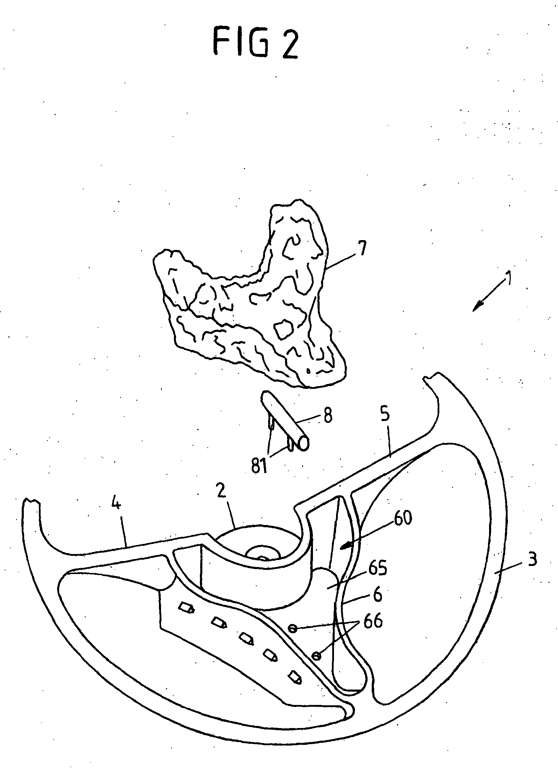

Die Figur 2 zeigt das Lenkrad der Figur 1, wobei zusätzlich ein schematisch dargestellter Gassack 7 und ein Gasgenerator 8 dargestellt sind. Der Gasgenerator 8 ist als Rohrgasgenerator ausgebildet und weist zwei abstehende Bolzen 81 auf. Diese sind dazu vorgesehen, zur Befestigung des Gasgenerators 8 am Lenkradskelett durch die Öffnungen 66 der Bodenplatte 65 des Aufnahmebehälters 60 gesteckt zu werden. Der Gasgenerator kann jedoch auch in anderer Weise wie beispielsweise unter Verwendung von Klemmschellen am Aufnahmebehälter 60 befestigt werden.

Der Gassack 7 wird in den Aufnahmebehälter 60 eingebracht. Hierzu kann beispielsweise vorgesehen sein, dass der Gassack 7 maschinell in den Aufnahmebehälter 60 hineingefaltet wird. Alternativ kann vorgesehen sein, dass der Gassack 7 vakuumverpackt ist, wobei der Gassack mittels Unterdruck zu einem Gassackpaket komprimiert worden ist. Dieses wird in einer durch eine Folie gebildeten, gasdicht verschlossenen Schutzhülle verstaut, die eine Expansion des Gassackpaketes solange verhindert, wie dieses nicht zum Schutz eines Fahrzeuginsassen mittels des Gasgenerators 8 aufgeblasen wird. Unter der Einwirkung des sich beim Aufblasen entfaltenden Gassackpaketes zerbirst eine solche Folie, so dass sich das Gassackpaket entfalten kann. Ein solches Gassackpaket wird bei Verwendung einer Vakuumverpackung in den Aufnahmebehälter 60 gelegt.

Der Figur 2 ist des Weiteren zu entnehmen, dass der Gassack 7 sich in dem Aufnahmebehälter 60 seitlich angrenzend an die Lenkradnabe 2 in einem Raumbereich von etwa 180° um die Lenkradnabe 2 herum erstreckt.

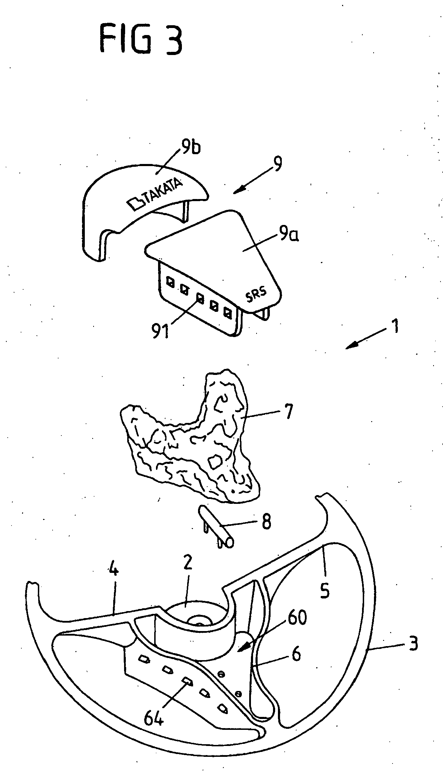

Die Figur 3 zeigt die Anordnung der Figur 2 unter zusätzlicher Darstellung einer Abdeckkappe 9, die im fertig montiertem Zustand des Lenkrads dem Fahrer zugewandt ist. Im dargestellten Ausführungsbeispiel, jedoch nicht notwendigerweise, ist die Abdeckkappe zweiteilig ausgebildet und umfasst ein erstes Teil 9a und ein zweites Teil 9b.

Das erste Teil 9a ist dafür vorgesehen, auf dem Aufnahmebehälter 60 angeordnet und mit diesem verbunden zu werden. Hierzu weist die Abdeckkappe 9a schematisch dargestellte Befestigungselemente 91, beispielsweise Rastelemente auf, die mit den Befestigungsmitteln 64 des Aufnahmebehälters 60 korrespondieren.

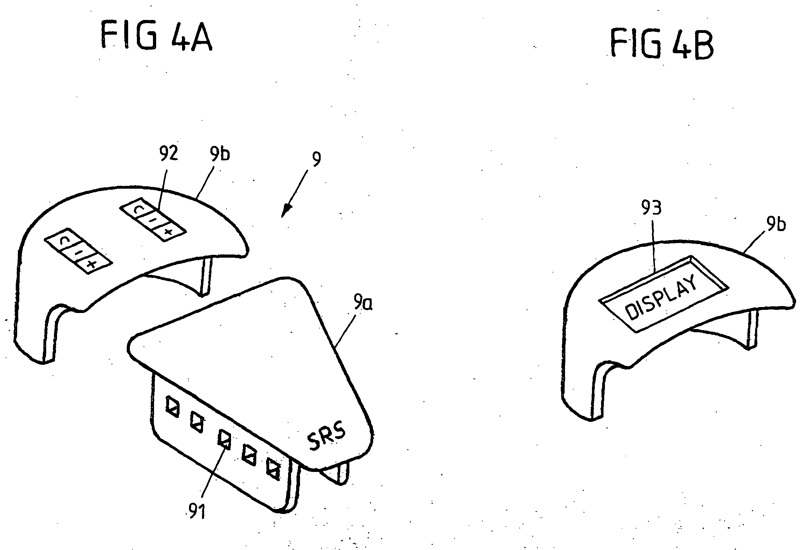

Das zweite Teil 9b ist dafür vorgesehen, im fertig montierten Lenkrad den Nabenbereich 2 zu überdecken. Dabei kann vorgesehen sein, wie es in der Figur 4A dargestellt ist, dass in das zweite Teil 9b Bedienelemente 92 integriert sind, beispielsweise Bedienelemente für einen Bordcomputer oder ein Autoradio. Des Weiteren können ergänzend oder alternativ, wie es in der Figur 4B dargestellt ist, in den zweiten Teil 9b der Abdeckkappe 9 Displayelemente 93 integriert sein.

Das zweite Teil 9b der Abdeckkappe 9 ist darüber hinaus in einer Ausführungsvariante dazu vorgesehen, in Zusammenhang mit weiteren Elementen (nicht dargestellt) eine Hupenfunktion zu realisieren. Hierzu ist das zweite Teil 9b beweglich, beispielsweise schwenkbar im Lenkrad gelagert. Eine Hupenfunktion kann dabei durch einen Fahrer mit geringer Betätigungskraft ausgelöst werden, da zum Auslösen der Hupenfunktion lediglich die Abdeckkappe 9b verschwenkt werden muss, nicht dagegen ein wesentlich schwereres Gassackmodul, wie es im Stand der Technik erforderlich ist.

Die Verwendung einer zweiteiligen Abdeckkappe 9 weist auch den Vorteil geringer Spaltmaße auf. Die Spaltmaße stellen den notwendigen Bewegungslauf zwischen der Abdeckkappe und dem Lenkradskelett bereit, um die Hupenkontakte schließen zu können. Ohne solche Spaltmaße ist eine einwandfreie Hupenfunktion nicht zuverlässig realisierbar, da ein Mindestmaß an Kraft und Weg einzuhalten ist, um eine Hupenfunktion realisieren zu können. Dadurch, dass nur das zweite Teil 9b beweglich gelagert wird, können die Spaltmaße minimiert werden.

Im Ausführungsbeispiel der Figuren 1 bis 3 stellen das Lenkradskelett 2-6, der in dieses integrierte Aufnahmebehälter 60, der Gassack 7, der Gasgenerator 8 sowie der eine Teil 9a der Abdeckkappe, der den Aufnahmebehälter 60 verschließt und optisch begrenzt, ein Gassackmodul dar. Dieses kann weitere Komponenten, wie beispielsweise eine Umschäumung des Lenkradskeletts und eine Ummantelung, beispielsweise aus Leder oder einem Kunststoffmaterial, aufweisen. Ein solches Gassackmodul bzw. Lenkrad mit integriertem Gassack weist eine hohen Fertigungstiefe auf. Seitens z.B. eines Erstausrüsters (OEM) bedarf es nur noch einer Montage des Lenkrads auf der Lenkwelle sowie der Anbringung einer geringen Anzahl verbleibender Komponenten wie beispielsweise des zweiten Teils 9b der zweiteiligen Gassackkappe 9.

Es wird darauf hingewiesen, dass die Ausgestaltung des Aufnahmebehälters 60 im Ausführungsbeispiel der Figuren 1 bis 3 lediglich beispielhaft zu verstehen ist. Zahlreiche andere Ausgestaltungen einer Integration eines Aufnahmebehälters 60 für einen Gassack oder ein gefaltetes Gassackpaket liegen im Rahmen der Erfindung. Beispielsweise kann sich der Aufnahmebehälter ringförmig oder teilweise ringförmig um die Lenkradnabe 2 erstrecken. Auch in diesem Fall ist die Lenkradnabe 2 für eine Montage von oben frei zugänglich. Ebenso ist es denkbar, dass der Aufnahmebehälter 60 sich stärker in den Bereich der anderen Speichen 4, 5 erstreckt, oder beispielsweise lediglich im Bereich der seitlichen Speichen 4, 5 ausgebildet ist. Auch ist es denkbar, dass das Lenkrad eine andere Anzahl von Speichen aufweist, für welchen Fall der Aufnahmebehälter in anderer Weise angeordnet und ausgebildet ist. Auch kann eine Ringform eines Aufnahmebehälters mit einer exzentrischen Ausgestaltung kombiniert sein.

Es wird des Weiteren darauf hingewiesen, dass der in den Figuren 2 und 3 dargestellte Gasgenerator 8 lediglich beispielhaft zu verstehen ist. Statt eines Rohrgasgenerators kann beispielsweise auch ein topfförmiger Gasgenerator eingesetzt und im Bereich des Aufnahmebehälters 60 befestigt sein.

In weiteren Ausgestaltungen wird der Gasgenerator einstückig mit dem Lenkradskelett gegossen. Dabei wird im Lenkradskelett ein Volumen bereitgestellt, das mit einem Kaltgas oder einem pyrotechnischen Treibsatz gefüllt werden kann. Das Befüllen eines solchen Volumens des Lenkradskelettes mit Gas oder einem pyrotechnischen Treibsatz kann vor oder nach dem Befestigen des Lenkrads an der Lenkwelle eines Fahrzeugs erfolgen.

Des Weiteren wird darauf hingewiesen, dass im Ausführungsbeispiel der Figuren 1 bis 3 alternativ eine einstückige Abdeckkappe einsetzbar ist. Diese wird nach Befestigung des Lenkrads an der Lenkwelle z.B. seitens eines Erstausrüsters montiert.

Wie ausgeführt, ist das Lenkradskelett mit der Lenkradnabe 2, dem Lenkradkranz 3, den Lenkradnaben 4, 5, 6 und dem integrierten Aufnahmebehälter 60 im Ausführungsbeispiel der Figuren 1-3 als einstückiges Teil ausgebildet. In alternativen Ausführungsbeispielen kann vorgesehen sein, dass mindestens eines der genannten Elemente des Lenkradskelettes gesondert hergestellt und dann mit den anderen Elementen des Lenkradskelettes verbunden ist. Auch kann vorgesehen sein, dass mindestens zwei Elemente des Lenkradskeletts aus unterschiedlichen Materialien bestehen.

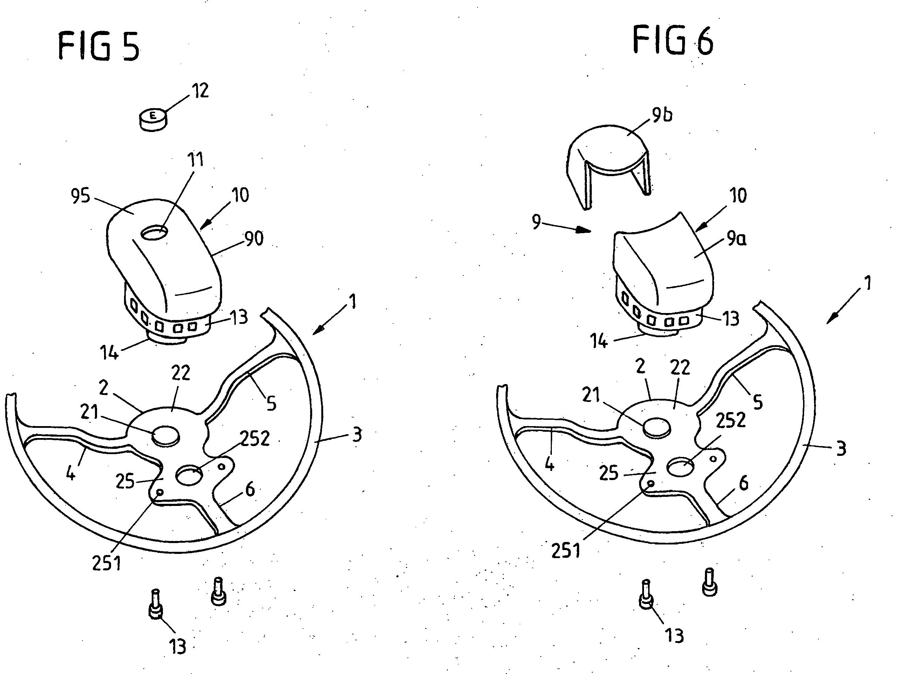

Das Ausführungsbeispiel der Figuren 1 bis 3 betrifft eine Ausführungsvariante der Erfindung, bei der ein Gassack und ein Gasgenerator unmittelbar in ein Lenkrad integriert werden. Es liegt jedoch ebenfalls im Rahmen der Erfindung, dass der Gassack und der Gasgenerator zunächst in einem Gassackmodul angeordnet werden, das seitens eines Automobilzulieferers hergestellt wird. Dieses Gassackmodul wird dann z.B. seitens eines Erstausrüsters bei der Montage des Lenkrads im Lenkrad befestigt. Auch bei einem solchen Lenkradaufbau mit gesondertem Gassackmodul ist die vorliegende Erfindung realisierbar, wie im Folgenden anhand der Figuren 5 und 6 an zwei Ausführungsbeispielen beispielhaft erläutert wird.

Die Figur 5 zeigt ein Lenkrad mit einem Lenkradskelett, das eine Lenkradnabe 2, einen Lenkradkranz 3 und drei Lenkradspeichen 4, 5, 6 aufweist. Die Lenkradnabe 2 umfasst dabei, ähnlich wie im Ausführungsbeispiel der Figur 1, einen Lenkradbefestigungsbereich in Form einer Öffnung 21 und einen sich daran anschließenden tellerförmigen Abschnitt 22.

Im dargestellten Beispiel weist der tellerförmige Abschnitt 22 eine exzentrische Erweiterung 25 in Richtung der mittigen Speiche 6 auf, wobei die exzentrische Erweiterung 25 nicht Bestandteil der eigentlichen Lenkradnabe ist, sondern ein weiteres Element des Lenkradskeletts bildet. Als Lenkradnabe im Sinne der vorliegenden Erfindung wird nur ein kreisförmiger oder radialsymmetrischer Nabenbereich betrachtet, der den Lenkradbefestigungsbereich 21 ausbildet.

Die exzentrische Erweiterung 25 umfasst eine mittige Öffnung 252 und zwei dazu symmetrisch ausgebildete Befestigungsöffnungen 251. Die exzentrische Erweiterung 25 dient der Aufnahme und Befestigung eines Gassackmoduls 10. An ihrem radial außen liegenden Ende geht die Erweiterung 25 in die dritte Lenkradspeiche 6 über.

Das Gassackmodul 10 weist einen konventionellen Aufbau auf. Es umfasst ein gefaltetes Gassackpaket, das vakuumverpackt sein kann, einen Gasgenerator und ein Modulgehäuse 13. Es kann weitere Komponenten wie einen Gasgeneratorträger aufweisen. Das Modulgehäuse 13 wird durch eine einstückige Abdeckkappe 90 verschlossen. Die Abdeckkappe 90 entspricht von ihrer Größe nicht dem Modulgehäuse 13, sondern erstreckt sich in einem überstehenden Bereich 95 über das Modulgehäuse 13 hinaus. In diesem überstehenden Bereich 95 ist mittig eine Öffnung 11 ausgebildet, die durch ein gesondertes Verschlusselement 12, das beispielsweise mit einem Emblem versehen sein kann, verschließbar ist.

Das Gassackmodul 10 wird als vorgefertigtes Modul durch einen Automobilzulieferer hergestellt. Die Montage am Lenkrad 1 erfolgt z.B. beim Erstausrüster (OEM). Hierzu wird das Gassackmodul 10 an der exzentrischen Erweiterung 25 am Lenkradskelett befestigt, wobei ein Bereich 14 des Gassackmoduls in die Öffnung 252 hineinragt und das Gassackmodul 10 mittels zweier Schrauben oder Bolzen 13 und der Befestigungsöffnungen 252 an der Erweiterung 25 befestigt wird. Die Ausrichtung des Gassackmoduls 10 am Lenkrad 1 ist dabei derart, dass die Öffnung 11 im überstehenden Bereich 95 der Gassackkappe 90 oberhalb der Öffnung 22 der Lenkradnabe 2 positioniert ist. Dies erlaubt es, auch nach Montage des Gasgenerators 10 am Lenkrad 1 eine Zugänglichkeit der Nabenbefestigung zu erreichen. So können Befestigungsmittel wie Schrauben und Befestigungswerkzeuge wie Schraubenzieher und dergleichen für eine Montage von oben durch die Öffnung 11 hindurchgeführt werden.

Nach Befestigung des Lenkrads 1 an einer Lenkwelle kann die Öffnung 11 der Abdeckkappe 90 durch das Verschlusselement 12 verschlossen werden. Die Montage des Lenkrads ist abgeschlossen.

Es wird darauf hingewiesen, dass auch beim Beispiel der Figur 5 der Gassack exzentrisch zur Lenkradnabe 2 angeordnet ist. Dies wird dadurch erreicht, dass das Gassackmodul 10 mit dem gefalteten Gassack exzentrisch zur Lenkradnabe 2 in dem Abschnitt 25 am Lenkrad befestigt ist Der überstehende Bereich 95 ist lediglich vorgesehen, um auch im Bereich oberhalb der Lenkradnabe 2 eine Abdeckung zum Fahrer zu realisieren. Dieser überstehende Bereich 95 dient jedoch nicht mehr dem Verschluss und der Abdeckung des Modulgehäuses und des sich in diesem befindlichen gefalteten Gassacks.

Die Figur 6 zeigt ein weiteres Beispiel, das bis auf den Umstand dem Beispiel der Figur 5 entspricht, dass die Abdeckkappe 9 des Gassackmoduls 10 zweiteilig ausgebildet ist und einen ersten Teil 9a aufweist, der Bestandteil des Gassackmoduls 10 ist und das Modulgehäuse mit dem gefalteten Gassack abdeckt, und ein zweites Teil 9b aufweist, das erst nach der Montage des Gassackmoduls am Fahrzeuglenkrad und nach der Montage des Fahrzeuglenkrads an der Lenkwelle befestigt wird. Die Montage der zweiten Teils 9b der Abdeckkappe erfolgt z.B beim Erstausrüster. Das Gassackmodul 10 einschließlich des ersten Teils 9a der Abdeckkappe kann dagegen vollständig bei einem Automobilzulieferer hergestellt werden.

Die in Bezug auf die Figuren 3, 4A und 4B erläuterten Vorteile einer zweiteiligen Abdeckkappe 9 gelten auch hier. Insbesondere können in den zweiten Teil 9b der Abdeckkappe ähnlich wie in den Figuren 4A und 4B Bedienelemente und/oder Displayelemente integriert werden. Hierdurch kann davon abgesehen werden, solche Bedienelemente und/oder Displayelemente am Lenkradkranz zu realisieren, wodurch der Aufbau des Lenkradkranzes vereinfacht wird. Des Weiteren können mittels des zweiten Teils 9b der Abdeckkappe eine geringere Hupauslösekraft und geringe Spaltmaße realisiert werden.

Den Figuren 5 und 6 ist des Weiteren zu entnehmen, dass der Gassack sich in dem Gassackmoduls 10 seitlich angrenzend an die Lenkradnabe 2 in einem Raumbereich von etwa 30° um die Lenkradnabe 2 herum erstreckt.

Die Erfindung beschränkt sich in ihrer Ausgestaltung nicht auf die vorstehend dargestellten Ausführungsbeispiele, die lediglich beispielhaft zu verstehen sind. Beispielsweise können Größe, Form und Ausgestaltung der Lenkradnabe, der Lenkradspeichen sowie eines gegebenenfalls vorhandenen Aufnahmebehälters für einen Gassack von den beschriebenen Ausführungsbeispielen abweichen.

## Patentansprüche

1. Fahrzeuglenkrad (1) mit einem Lenkradskelett (2-6), das eine Lenkradnabe (2), einen Lenkradkranz (3) und Lenkradspeichen (4, 5, 6), die den Lenkradkranz (3) mit der Lenkradnabe (2) verbinden, aufweist, wobei die Lenkradnabe (2) einen Lenkradbefestigungsbereich (22) zur Befestigung des Fahrzeuglenkrads (1) an einer Lenkwelle eines Fahrzeugs aufweist, und wobei im Fahrzeuglenkrad (1) ein Gassack (7) montiert ist, der in radialer Richtung ausschließlich außerhalb der Lenkradnabe (2) und/oder exzentrisch zur Lenkradnabe (2) im Fahrzeuglenkrad (1) angeordnet ist,
**dadurch gekennzeichnet,**
**dass** das Lenkradskelett (2-6) einen Aufnahmebehälter (60) für den Gassack (7) ausbildet, in dem der Gassack (7) angeordnet ist.

2. Fahrzeuglenkrad nach Anspruch 1, **dadurch gekennzeichnet, dass** der Aufnahmebehälter (60) exzentrisch zur Lenkradnabe (2) ausgebildet ist.

3. Fahrzeuglenkrad nach Anspruch 2, **dadurch gekennzeichnet, dass** der Aufnahmebehälter (60) einstückig mit anderen Elementen des Lenkradskeletts (2-6) ausgebildet ist.

4. Fahrzeuglenkrad nach Anspruch 2 oder 3, **dadurch gekennzeichnet, dass** das Lenkradskelett (2-6) einen Speichenbereich (4, 5, 6) aufweist und der Aufnahmebehälter (60) im Speichenbereich (4, 5, 6) ausgebildet ist.

5. Fahrzeuglenkrad nach einem der vorangehenden Ansprüche, **dadurch gekennzeichnet, dass** der Gassack (7) ein vakuumverpacktes Gassackpaket bildet.

6. Fahrzeuglenkrad nach einem der vorangehenden Ansprüche, **dadurch gekennzeichnet, dass** ein Gasgenerator (8) direkt am Lenkradskelett (2-6) befestigt oder in dieses integriert ist.

7. Fahrzeuglenkrad nach einem der vorangehenden Ansprüche, **dadurch gekennzeichnet, dass** das Lenkrad (1) eine einem Fahrer zugewandte zweiteilige Abdeckkappe (9) aufweist, wobei ein erster Teil (9a) der Abdeckkappe (9) den Gassack (7) abdeckt und ein zweiter Teil (9b) der Abdeckkappe (9) die Lenkradnabe (2) abdeckt.

8. Fahrzeuglenkrad nach Anspruch 7, **dadurch gekennzeichnet, dass** der zweite Teil (9b) der Abdeckkappe (9) mindestens ein Bedienelement (92) und/oder mindestens ein Displayelement (93) aufweist.

9. Fahrzeuglenkrad nach Anspruch 7 oder 8 **dadurch gekennzeichnet, dass** der zweite Teil (9b) der Abdeckkappe (9) beweglich gelagert und mit Elementen, die eine Hupenfunktion realisieren, gekoppelt ist.

10. Fahrzeuglenkrad nach einem der vorangehenden Ansprüche, **dadurch gekennzeichnet, dass** das Lenkrad (1) in radialer Richtung ausschließlich außerhalb der Lenkradnabe (2) und dabei derart exzentrisch zur Lenkradnabe (2) angeordnet ist, dass der Gassack seitlich der Lenkradnabe (2) in einem Raumbereich von maximal etwa 240° angeordnet ist.

## Claims

1. A vehicle steering wheel (1) with a steering wheel skeleton (2-6) which comprises a steering wheel hub (2), a steering wheel rim (3) and steering wheel spokes (4, 5, 6) which connect the steering wheel rim (3) with the steering wheel hub (2), wherein the steering wheel hub (2) includes a steering wheel fastening region (22) for fastening the vehicle steering wheel (1) to a steering shaft of a vehicle, and wherein in the vehicle steering wheel (1) a gas bag (7) is mounted, which is arranged in the vehicle steering wheel (1) in radial direction exclusively outside the steering wheel hub (2) and/or eccentrically to the steering wheel hub (2),
**characterized in that**
the steering wheel skeleton (2-6) forms a receptacle (60) for the gas bag (7), in which the gas bag (7) is arranged.

2. The vehicle steering wheel according to claim 1, **characterized in that** the receptacle (60) is formed eccentrically to the steering wheel hub (2).

3. The vehicle steering wheel according to claim 2, **characterized in that** the receptacle (60) is formed integrally with other elements of the steering wheel skeleton.

4. The vehicle steering wheel according to claim 2 or 3, **characterized in that** the steering wheel skeleton (2-6) includes a spoke region (4, 5, 6) and the receptacle (60) is formed in the spoke region (4, 5, 6).

5. The vehicle steering wheel according to any of the preceding claims, **characterized in that** the gas bag (7) forms a vacuum-packed gas bag package.

6. The vehicle steering wheel according to any of the preceding claims, **characterized in that** a gas generator (8) is attached directly to the steering wheel skeleton (2-6) or is integrated into the same.

7. The vehicle steering wheel according to any of the preceding claims, **characterized in that** the steering wheel (1) includes a two-part covering cap (9) facing a driver, wherein a first part (9a) of the covering cap (9) covers the gas bag (7) and a second part (9b) of the covering cap (9) covers the steering wheel hub (2).

8. The vehicle steering wheel according to claim 7, **characterized in that** the second part (9b) of the covering cap (9) includes at least one operating element (92) and/or at least one display element (93).

9. The vehicle steering wheel according to claim 7 or 8, **characterized in that** the second part (9b) of the covering cap (9) is movably mounted and coupled with elements which realize a horn function.

10. The vehicle steering wheel according to any of the preceding claims, **characterized in that** the steering wheel (1) is arranged in radial direction exclusively outside the steering wheel hub (2) and eccentrically to the steering wheel hub (2) such that the gas bag is arranged laterally of the steering wheel hub (2) in a space region of maximally about 240°.

## Revendications

1. Volant de véhicule (1) avec un squelette de volant (2-6) présentant un moyeu de volant (2), une couronne de volant (3) et des rayons de volant (4, 5, 6) qui relient la couronne de volant (3) au moyeu de volant (2), dans lequel le moyeu de volant (2) présente une zone de fixation de volant (22) pour la fixation du volant de véhicule (1) sur un arbre de direction d'un véhicule, et dans lequel un coussin gonflable (7) est monté dans le volant de véhicule (1), lequel est agencé en direction radiale exclusivement en dehors du moyeu de volant (2) et/ou de manière excentrée au moyeu de volant (2) dans le volant de véhicule (1),
**caractérisé en ce que**
le squelette de volant (2-6) réalise un récipient de réception (60) pour le coussin gonflable (7), dans lequel le coussin gonflable (7) est agencé.

2. Volant de véhicule selon la revendication 1, **caractérisé en ce que** le récipient de réception (60) est réalisé de manière excentrée au moyeu de volant (2).

3. Volant de véhicule selon la revendication 2, **caractérisé en ce que** le récipient de réception (60) est réalisé d'un seul tenant avec d'autres éléments du squelette de volant (2-6).

4. Volant de véhicule selon la revendication 2 ou 3, **caractérisé en ce que** le squelette de volant (2-6) présente une zone de rayons (4, 5, 6) et le récipient de réception (60) est réalisé dans la zone de rayons (4, 5, 6).

5. Volant de véhicule selon l'une des revendications précédentes, **caractérisé en ce que** le coussin gonflable (7) forme un paquet de coussin gonflable emballé sous vide.

6. Volant de véhicule selon l'une des revendications précédentes, **caractérisé en ce qu'**un générateur de gaz (8) est directement fixé sur le squelette de volant (2-6) ou est intégré dans celui-ci.

7. Volant de véhicule selon l'une des revendications précédentes, **caractérisé en ce que** le volant (1) présente un capuchon de recouvrement (9) en deux parties tourné vers un conducteur, dans lequel une première partie (9a) du capuchon de recouvrement (9) recouvre le coussin gonflable (7) et une seconde partie (9b) du capuchon de recouvrement (9) recouvre le moyeu de volant (2).

8. Volant de véhicule selon la revendication 7, **caractérisé en ce que** la seconde partie (9b) du capuchon de recouvrement (9) présente au moins un élément de commande (92) et/ou au moins un élément d'affichage (93).

9. Volant de véhicule selon la revendication 7 ou 8, **caractérisé en ce que** la seconde partie (9b) du capuchon de recouvrement (9) est logée de manière mobile et est couplée avec des éléments qui réalisent une fonction d'avertisseur.

10. Volant de véhicule selon l'une des revendications précédentes, **caractérisé en ce que** le volant (1) est agencé en direction radiale exclusivement en dehors du moyeu de volant (2) et de manière excentrée au moyeu de volant (2) de telle manière que le coussin gonflable soit agencé latéralement du moyeu de volant (2) dans une zone spatiale d'environ 240° maximum.
